(19) Europäisches Patentamt / European Patent Office / Office européen des brevets

(11) **EP 2 525 230 A1**

(12) **EUROPEAN PATENT APPLICATION**
published in accordance with Art. 153(4) EPC

(43) Date of publication:
**21.11.2012 Bulletin 2012/47**

(51) Int Cl.:
**G01N 35/10** (2006.01)      **B01J 4/00** (2006.01)
**G01N 1/00** (2006.01)

(21) Application number: **10842995.2**

(22) Date of filing: **10.12.2010**

(86) International application number:
**PCT/JP2010/007179**

(87) International publication number:
**WO 2011/086635 (21.07.2011 Gazette 2011/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2010   JP 2010004509**

(71) Applicant: **Hitachi High-Technologies Corporation
Tokyo 105-8717 (JP)**

(72) Inventors:
• **MORI, Takamichi**
  **Hitachinaka-shi**
  **Ibaraki 312-8504 (JP)**
• **ISHIZAWA, Hiroaki**
  **Hitachinaka-shi**
  **Ibaraki 312-8504 (JP)**
• **KUSANO, Kazumi**
  **Hitachinaka-shi**
  **Ibaraki 312-8504 (JP)**
• **YAMAZAKI, Isao**
  **Hitachinaka-shi**
  **Ibaraki 312-8504 (JP)**

(74) Representative: **Strehl Schübel-Hopf & Partner
Maximilianstrasse 54
80538 München (DE)**

(54) **AUTOMATIC ANALYZING DEVICE**

(57)      Disclosed is an automatic analyzer designed so that when it discharges a sample into an empty reaction vessel, the analyzer dispenses the sample without bringing a distal end of a sample probe into contact with a bottom surface of the reaction vessel and can thereby dispense the sample with stable dispensing accuracy in addition to extending lives of the sample probe and the reaction vessel.

During dispensing into the reaction vessel, a constant clearance is provided between the sample probe and the bottom surface of the reaction vessel, a previously set volume of the sample is discharged in split actions, not in one action. A time for the sample to wettingly spread over the bottom surface of the reaction vessel after being discharged into the bottom surface during first discharging action is provided and after the sample has wettingly spread over the bottom surface of the reaction vessel, second discharging action takes place. Thus, the discharged sample is not carried back by the sample probe and is dispensed with stable dispensing accuracy.

Fig.4

EP 2 525 230 A1

**Description**

Technical Field

The present invention relates to an automatic analyzer that automatically executes analysis of blood, urine, and other biological samples, and more particularly to an automatic analyzer that samples a liquid from a sample container or a reagent container and then dispenses the liquid into a reaction vessel.

Background Art

To perform accurate biochemical measurements with an automatic analyzer, it is absolutely necessary to reliably dispense a sample and a reagent into a bottom surface of a reaction vessel (for the sake of descriptive simplicity, the two kinds of substances dispensed are hereinafter referred to collectively and simply as the sample only), and there must not be a empty dispending or carry back. Conventional dispensing mechanisms that dispense the sample into a reaction vessel achieve reliable dispensing into a bottom surface of the reaction vessel by pressing a sample probe, which has an obliquely cut distal end, against the bottom surface of the reaction vessel before dispensing the sample via a sampling pump.

In addition, Patent Document 1 discloses a method intended for dispensing in very small volumes of some 10 $\mu$L, the method being for achieving accurate microvolume dispensing by controlling the distance between a distal end of a probe and a bottom surface of a vessel to an optimal value.

Prior Art Document

Patent Document

Patent Document 1 JPA-2003-344426

Summary of the Invention

Problems to be Solved by the Invention

The foregoing related art has the following drawbacks.

Firstly, since the obliquely cut distal end of the sample probe is brought into contact with the bottom surface of the reaction vessel each time the dispensing of the sample is repeated, the distal end of the sample probe and the bottom surface of the reaction vessel are subject to damage that leads to a decrease in dispensing accuracy. In particular, recent sample probes each have a thin and sharp distal end to dispense the sample in small volumes of 1 $\mu$L or less for maintained initial dispensing accuracy are liable to damage the bottom surface of a reaction vessel and the distal end of the sample probe. Stable and accurate microvolume dispensing necessitates that the sample be dispensed without damaging the bottom surface of the reaction vessel and the distal end of the sample probe.

Secondly, since the sample is dispensed with the sample probe pressed (bowingly state) against the bottom surface of the reaction vessel, when the sample probe is lifted upon completion of sample dispensing, part of the sample may stick to lateral faces of the sample probe and be lifted together without being supplied to the bottom surface of the vessel. In addition, when the sample probe is lifted from the pressed state and returned to an original state (non-bowing state), vibration of the sample probe may cause the sample sticking to the lateral faces or cut distal end of the sample probe, to splash onto lateral faces of the reaction vessel. If this is the case, a previously set volume of sample will not be dispensed.

Futhermore, even when microvolume dispensing with the method disclosed in Patent Document 1 is conducted so that a very small clearance exists between the distal end of the sample probe and the bottom surface of the reaction vessel, since the volume of sample dispensed is very small, the sample may come into contact with the bottom surface of the reaction vessel but will not be reliably spot-applied to the bottom surface of the vessel. Resultantly, the sample probe is occasionally lifted with the sample sticking to the probe end.

The above problems usually tend to affect smaller microvolumes of dispensing more significantly, hence affecting reliability of measurement results as such. An object of the present invention is to provide an automatic analyzer that maintains microvolume-dispensing accuracy without damaging a distal end of a sample probe and a bottom surface of a reaction vessel and without causing a sample to stick to lateral faces of the sample probe.

Means for Solving the Problems

The present invention for attaining the above object provides the following automatic analyzer configuration.

The automatic analyzer that includes probe for suctioning and discharging a liquid, a vessel for accommodating the liquid as discharged from the probe, and a syringe mechanism for discharging the liquid in a plurality of split actions to discharge the probe-suctioned liquid into the vessel.

The liquid here means a sample, a reagent, and/or the like, and the vessel means a reaction vessel present on a reaction-analyzing unit.

Effects of the Invention

The present invention discharges the sample without bringing a distal end of the sample probe into contact with a bottom surface of the reaction vessel. Since the distal end of the sample probe and bottom surface of the reaction vessel do not come into contact with each other, neither the probe nor the reaction vessel suffers any damage due to contact and both are correspondingly extended in life.

In addition, the present invention discharges the sample so that the sample wettingly spreads over lateral faces of the reaction vessel in first discharging operation. This prevents occurrence of a decrease in dispensing accuracy that is caused in the related art by the fact that when the sample is discharged with the clearance provided between the distal end of the sample probe and the bottom surface of the reaction vessel, part of the previously set volume of sample will not be dispensed into the bottom surface of the reaction vessel and the sample sticking to the lateral faces of the sample probe will be carried back. In the present invention, therefore, reliability improves because of dispensing accuracy not decreasing.

Brief Description of the Drawings

Fig. 1 is a schematic diagram of a general automatic analyzer.

Fig. 2 shows how a sample sticking to lateral faces of a sample probe is carried back by the probe without being dispensed.

Fig. 3 is a diagram illustrating how a sample wettingly spreads.

Fig. 4 shows a discharging method used to discharge the sample in two steps.

Fig. 5 shows a size of a liquid droplet which the sample probe can create.

Fig. 6 shows a discharging method that uses liquid level detection and a change in pressure.

Fig. 7 shows a discharging method used to discharge the sample in three steps.

Fig. 8 is a diagram illustrating how the sample is discharged.

Fig. 9 shows a waveform that indicates changes in pressure, caused when a small volume of sample is discharged.

Fig. 10 shows a waveform that indicates changes in pressure, caused when a large volume of sample is discharged.

Mode for Carrying Out the Invention

Hereinafter, embodiments of the present invention will be described using the accompanying drawings.

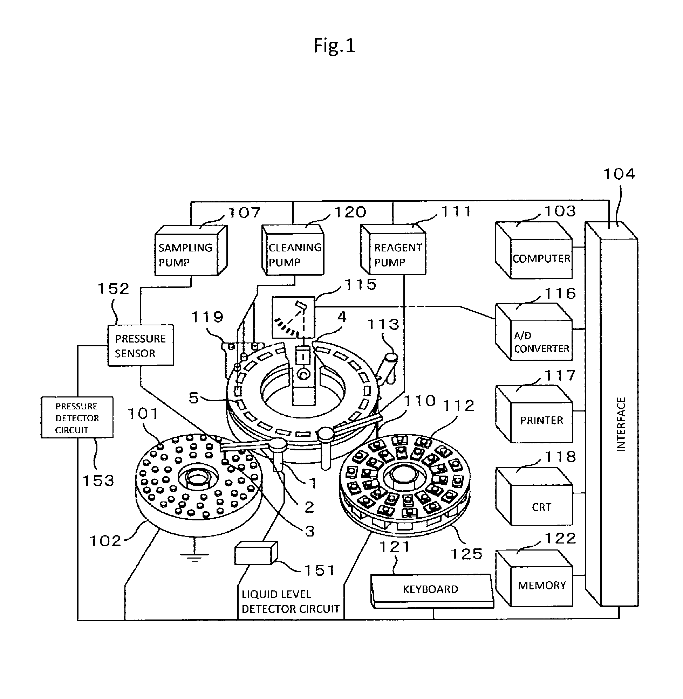

Fig. 1 shows a schematic diagram of a general automatic analyzer embodying the present invention. Since functions of the elements constituting this analyzer are known, detailed description of these elements and functions is omitted herein. A sampling mechanism 1 includes a sampling arm 2 constructed to rotate as well as to move the sample arm 2 vertically. The sampling arm 2 is also adapted for using a sample probe 3 mounted on the sampling arm 2, to suction samples from sample containers 101 placed on a sample disk 102 which rotates from side to side, and dispense the suctioned samples into reaction vessels 5. As can be seen from Fig. 1, the sample disk 102 is of a general structure adaptable to universal layout of sample containers 101 that allows the sample containers 101 to be directly arranged on the sample disk 102 or to be each placed on a test tube (not shown).

Reagent bottles 112, each for a specific analytical item relating to each sample to be analyzed, are arranged on rotatable reagent disk 125. A reagent-dispensing probe 110 mounted on a movable arm dispenses a predetermined volume of reagent from one of the reagent bottles 112 into one of the reaction vessels 5.

The sample probe 3 executes the suction and dispensing of each sample, in accordance with operation of a sampling syringe pump 107. The reagent-dispensing probe 110 executes suction and dispensing of the reagent, in accordance with operation of a reagent pump 111. The analytical items relating to each sample to be analyzed are entered from an input unit such as a keyboard 121 or a screen of a CRT unit 118. Operation of various units in the automatic analyzer is controlled by a computer 103.

As the sample disk 102 intermittently starts rotating, the sample containers 101 are transported to a sample-suctioning position and then the sample probe 103 is lowered into one of the sample containers at rest. During the lowering of the sample probe 3, upon its distal end coming into contact with a liquid surface of the sample, a liquid level detection circuit 151 outputs a detection signal, the signal of which the computer 103 then uses to control a driving unit of the sampling arm 2 to stop the lowering operation. Next after suctioning the predetermined volume of sample into the sample probe 3 by suction, the sample probe 3 moves to an upper limit of its vertical moving stroke. While the sample probe 3 is suctioning the predetermined volume of sample, a pressure detection circuit 153 upon receiving a signal from a pressure sensor 152 continuously monitors for changes in flow pathway internal pressure between the sample probe 3 and the sampling pump 107 during the suction. If an abnormality is detected in the suction pressure changes, since the predetermined volume of sample is most likely not to have been suctioned, an alarm is assigned to corresponding analytical data.

Next, the sampling arm 2 turns in a horizontal direction and moves the sample probe 3 downward at one of the reaction vessels 5 on the reaction disk 4. The sample probe 3 then dispenses the sample that the probe is holding, into the particular reaction vessel 5. Upon the reaction vessel 5 being moved to a reagent-adding position, a reagent relevant to a corresponding analytical item is added from the reagent-dispensing probe 110. As the sample and then the reagent are dispensed, liquid levels of the sample in the sample container 101 and the reagent in the reagent bottle 112 are detected, and a mixture in the reaction vessel internally holding the added sample and reagent is stirred by a stirring mechanism 113. The reaction vessel containing the mixture is transported to a photometer 115, in which, luminescence values or absorbance of the elements constituting the mixture is measured by a photomultiplier tube or by the photometer that is measuring means. The thus-obtained light-emission signal or photodetection signal is passed through an A/D converter 116 and then enters the computer 103 via an interface 104, for calculation of a concentration of the analytical item. Analytical results are stored into a memory 122 in addition to being either printed out onto a printer 117 or output to the screen of the CRT unit 118, via the interface 104. The reaction vessel 5 in which the photometry has been completed is cleaned at a position of a reaction vessel cleaning mechanism 119. A cleaning pump 120 supplies cleaning water to the reaction vessel, the pump 120 also draining a waste liquid from the reaction vessel. In the example of Fig. 1, three arrays of container holders are formed in the sample disk 102 to enable three arrays of sample containers 101 to be concentrically set up thereon, and one sample-suctioning position is provided in each array for the sample probe 3 to suction samples.

The above is the operation of the general automatic analyzer.

To improve sample-dispensing accuracy, the sample needs to be discharged in a manner that does not allow it to stick to the lateral faces of the sample probe 3. This would be possible by discharging the sample so that a very small clearance 202 exists between the bottom surface 201 of the reaction vessel and the distal end of the sample probe 3, and upon completion of the discharge, lifting up the sample probe 3 before the discharged sample rises in height and sticks to the lateral faces of the sample probe distal end. The discharging method discussed above, however, has had the problem that since it does not enable the sample to be accurately spot-applied to the bottom surface 201 of the reaction vessel, the discharged sample moves to the lateral faces of the sample probe distal end and is carried back intact by the probe.

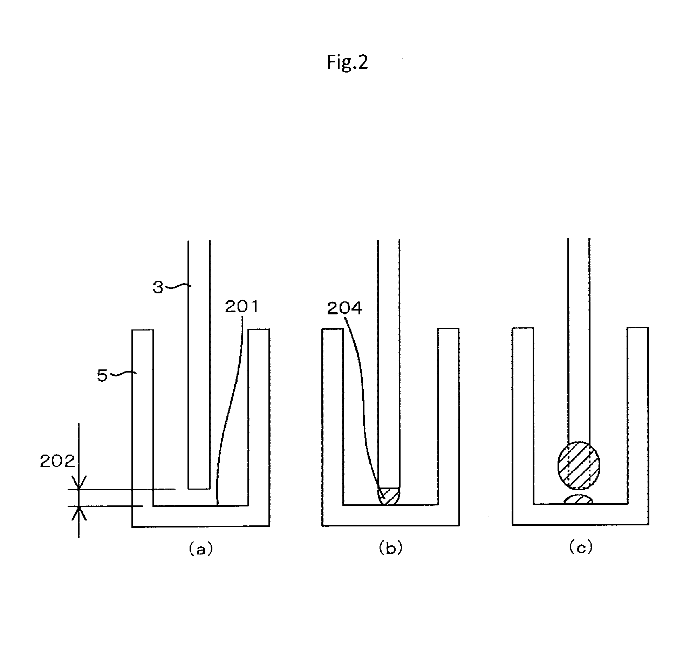

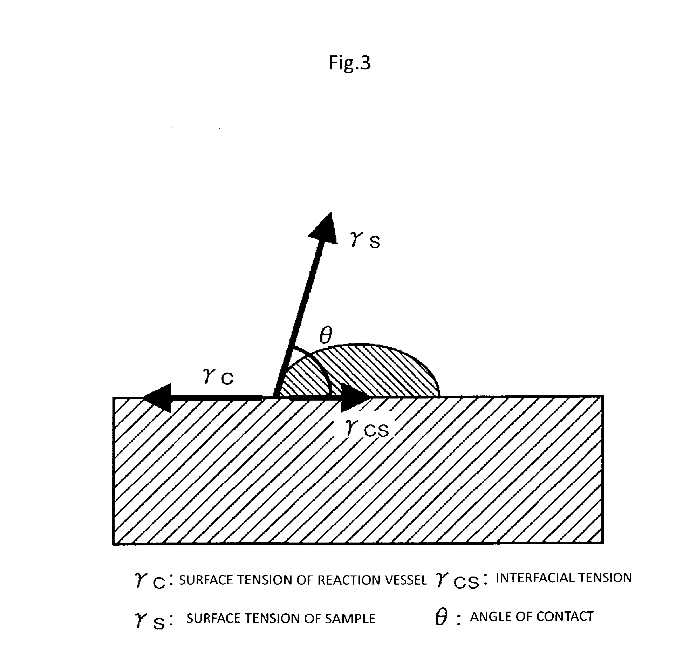

The carry-back of the sample that occurs when the sample is discharged with the very small clearance 202 provided between the bottom surface 201 of the reaction vessel and the distal end of the sample probe 3, as shown in Fig. 2(a), is described below referring to Fig. 2. The following Expression holds for an equilibrium of interfacial tension with a liquid droplet present on a plane (this state is shown in Fig. 3):

$$(\text{Expression 1})$$

$$\gamma C = \gamma CS + \gamma S \cos\theta$$

During sample discharging with the clearance 202 provided as in Fig. 2(a), when, as shown in Fig. 2(b), the sample comes into contact with the bottom surface 201 of the reaction vessel, a resulting change in interfacial structure between the bottom surface 201 of the reaction vessel and the sample reduces the interfacial tension $\gamma CS$.

$$(\text{Expression 2})$$

$$\cos\theta = (\gamma C - \gamma CS)/\gamma S$$

The deformation by Expression 1 makes Expression 2 hold and if $\gamma C$ and $\gamma S$ are constant, $\cos\theta$ increases with decreasing $\gamma CS$. It can be seen that since $0° \leq A \leq 180°$, the increase in $\cos\theta$ reduces contact angle $\theta$ and creates a wetting spread of the sample over the bottom surface 201 of the reaction vessel. Associated with the change in interfacial structure between the bottom surface 201 of the reaction vessel and the sample, a waiting time for interfacial energy to decrease is required for the wetting spread of the sample. The waiting time depends on chemical composition of the liquid and the bottom surface 201, so the optimal waiting time is considered to vary according to the kind of liquid dispensed, the kind and shape of reaction vessel, and/or other factors.

If the sample probe 3 is lifted before the discharged sample wettingly spreads over the bottom surface 201 of the reaction vessel, the sample is estimated to be left on the sample probe 3, as in Fig. 2(c), since the sample may fail to become completely acclimated to the bottom surface 201 of the reaction vessel. If the volume of sample discharged is very small, in particular, the amount of sample left on the lateral faces of the sample probe 3 is likely to be greater than that of sample discharged into the bottom surface 201 of the reaction vessel. Dispensing accuracy could decrease in that case.

First Embodiment

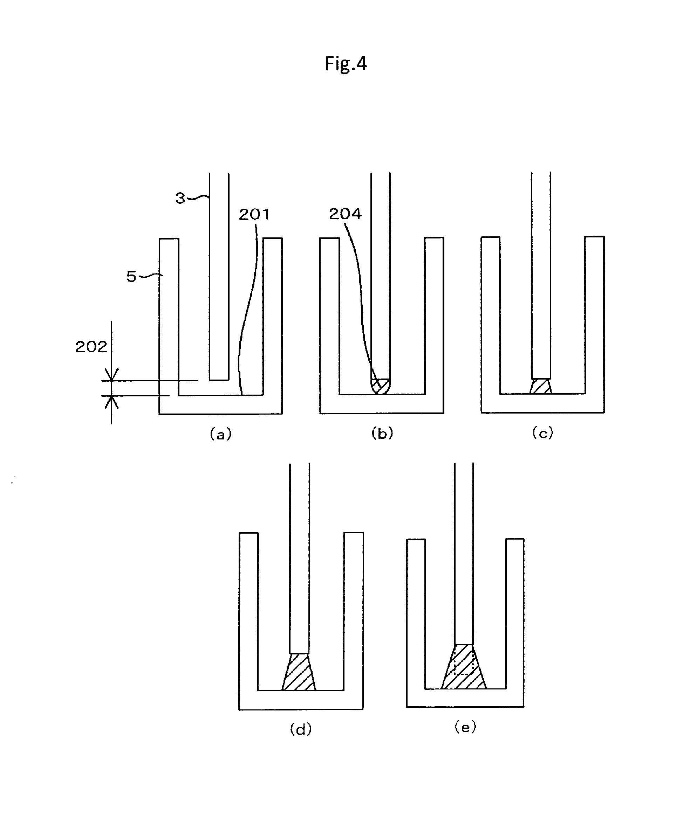

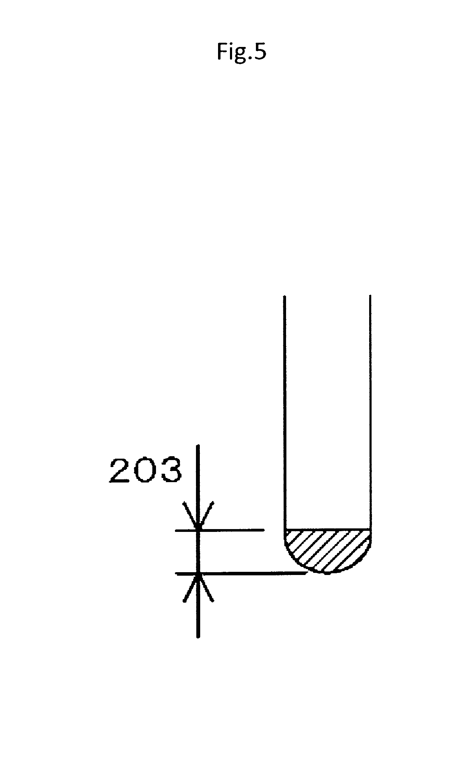

Fig. 4 shows one embodiment of the present invention with the above taken into account. As shown in Fig. 4 (a), the sample probe 3 is positioned so that the very small clearance 202 exists between the bottom surface 201 of the reaction vessel and the distal end of the sample probe 3. First discharging operation of the sample-discharge actions takes place. This state is shown in Fig. 4 (b). The volume of sample dispensed in this time (the first discharging operation) is equal to or less than a dispensing volume determined from critical ball-like liquid droplet holding height 203, or maximum height at which the sample probe 3 shown in Fig. 5 can hold a ball-like liquid droplet of the sample. The distance of the clearance 202 between the distal end of the sample probe 3 and the bottom surface 201 of the reaction vessel is controlled not to exceed the critical ball-like liquid droplet holding height 203 (shown in Fig. 5), or the maximum height at which the sample probe 3 shown in Fig. 5 can hold the ball-like liquid droplet of the sample. If a liquid of a size exceeding the critical ball-like liquid droplet holding height 203 should ever be discharged in the first discharging operation, then this could cause the sample to rise in height and stick to the lateral faces of the sample probe 3 (The sample probe 3 side of Fig. 2(c)). Additionally, should a second and subsequent sample-discharge actions take place in such a state, this might cause a problem such as incomplete spot-application of the sample to the bottom surface 201 of the reaction vessel or splashing of the sample onto the lateral faces of the reaction vessel 5 during upward movement of the sample probe 3. These problems could affect dispensing accuracy.

If the first dispensing volume is set to be a value not causing the critical ball-like liquid droplet holding height to be exceeded, actual critical ball-like liquid droplet holding height 203 obtained at the distal end of the sample probe 3 will be smaller than the critical ball-like liquid droplet holding height. The clearance 202 being between the distal end of the sample probe 3 and the bottom surface 201 of the reaction vessel, therefore, needs to be set to decrease according to magnitude of the actual critical ball-like liquid droplet holding height 203 obtained at the distal end of the sample probe 3.

As shown in Fig. 5 and Tables 1, 2, a size of the ball-like liquid droplet 204 which the sample probe 3 can hold at its distal end varies with a diameter of the distal end of the sample probe 3 and the kind of sample. For example, if the sample probe 3 has an outside diameter of $\Phi 0.4$ mm as shown in Table 1, it can be seen that since the critical ball-like liquid droplet holding height at which the sample probe 3 can hold a ball-like liquid droplet of a sample equivalent to water in properties such as viscosity to suction and discharge the sample is 0.3 mm, the clearance 202 between the distal end of the sample probe 3 and the bottom surface 201 of the reaction vessel must be controlled to 0.3 mm or less.

(Table 1)

| Table 1 | | | |
| Diameter of the sample probe and critical ball-like liquid droplet holding height outside diameter of $\Phi$ 0.4 mm | | | |
| Sample | Height (mm) | Radius (mm) | Cubic volume ($\mu$L) |
| --- | --- | --- | --- |
| Water | 0.30 | 0.23 | 0.04 |
| Serum | 0.62 | 0.36 | 0.20 |

(Table 2)

| Table 2 Diameter of the sample probe and critical ball-like liquid droplet holding height outside diameter of Φ 0.55 mm | | | |
| --- | --- | --- | --- |
| Sample | Height (mm) | Radius (mm) | Cubic volume (μL) |
| Water | 0.41 | 0.30 | 0.08 |
| Serum | 0.88 | 0.50 | 0.49 |

The viscosity of the sample can be a predetermined value or determined from information obtained by connecting a pressure gauge 152 or the like to a part of a flow pathway connected to the sample probe, and deriving information on the viscosity of the sample from, for example, a pressure waveform developed during the suction of the sample. It is also possible to classify the suctioned sample as serum, urine, a control sample, or the like, and control the clearance 202 by controlling the lowering of the sample probe 3 for the optimal clearance 202 fitting the particular kind of the sample.

Consider a case of using the sample probe 3 of Φ 0.4 mm in outside diameter, setting a necessary dispensing volume to be 1 μL, controlling the sample probe 3 to stop moving for the clearance 202 with respect to the bottom surface 201 of the reaction vessel to be 0.3 mm or less, and discharging the sample in two split actions. Also, assume that the sample probe 3 has a 1-meter tube length from the sampling pump 107, that a discharging rate of the sample as pushed out from the syringe pump 107 and discharged from the distal end of the sample probe 3 ranges between 1 μL/s and 50 μL/s, and that the sample to be evaluated is a water equivalent or a serum equivalent.

If 0.04 μL of the sample is discharged into the bottom surface 201 of the reaction vessel in a first discharging operation, the automatic analyzer waits for the discharged sample either to fully spread in a wetting condition over the bottom surface 201 of the reaction vessel, as shown in Fig. 4 (c), or to start wettingly spreading. After the wetting spread of the sample, the remaining 0.96 μL thereof is discharged in a second operation. Since the sample that was discharged in the first discharging operation fully wettingly spreads over the bottom surface 201 of the reaction vessel prior to a start of the second discharge, this discharging method prevents the sample from rising to the lateral faces of the sample probe 3 as in Fig. 2(c). Under these evaluation conditions, a waiting time required from completion of the first discharging operation, until the sample has fully wettingly spread over the bottom surface 201 of the reaction vessel, is at least 10 ms for discharging rates of 5 μL/s - 25 μL/s, irrespective of whether the sample is a water equivalent or a serum equivalent.

If the second discharging operation is conducted with the clearance 202 maintained, a contact area between the lateral faces of the sample probe 3 and the discharged sample will increase as in Fig. 4 (e) and the sample will stick to the lateral faces of the sample probe 3. The second discharging operation, therefore, is desirably conducted while the sample probe 3 is being lifted up as in Fig. 4 (d), in order to prevent the sample from sticking to the lateral faces of the sample probe 3. It has been described above that the waiting time required from the completion of the first discharging operation to the start of the wetting spread is at least 10 ms under the discharging conditions. In an actual analyzer configuration, however, a time from completion of the discharging operation of the syringe pump 107 to a complete stop of the sample movement inside the sampling probe 3 varies from configuration to configuration due to various factors such as the tube length from the sampling pump 107 and the sample probe 3, the kind of sample that is suctioned and discharged and discharging rate of the sample discharged from the distal end of the sample probe 3.

The waiting time until the discharged sample has wettingly spread over the bottom surface 201 of the reaction vessel, therefore, differs according to the particular configuration of the apparatus.

Second Embodiment

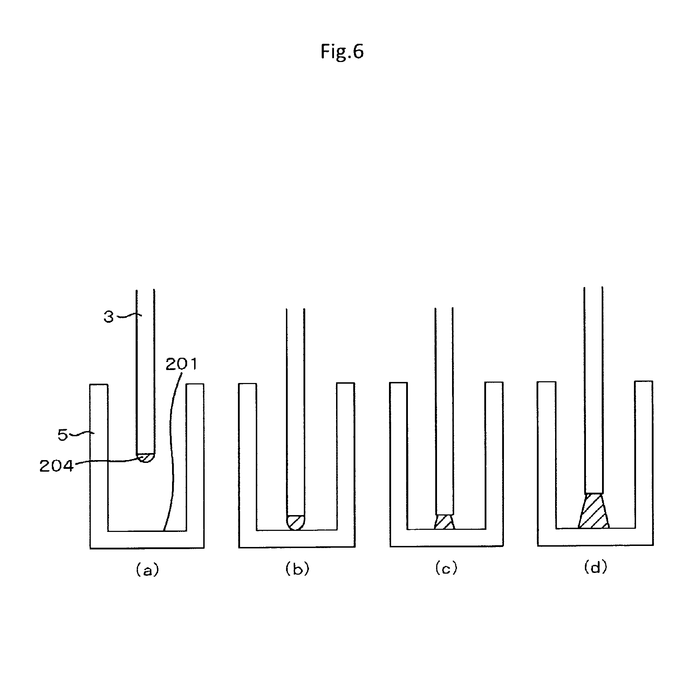

Another embodiment of the present invention will be described referring to Fig. 6.

As shown in Fig. 6 (a), the sample probe 3 is lowered with a ball-like liquid droplet 204 previously existing at the distal end of the sample probe 3 during a first discharging operation of the sample. The ball-like liquid droplet 204 that the distal end of the sample probe 3 holds will then come into contact with the bottom surface 201 of the reaction vessel, as shown in Fig. 6 (b). The liquid level detection circuit 151 detects a change in capacitance due to the contact of the ball-like liquid droplet 204 with the bottom surface 201 of the reaction vessel, and upon completion of the detection, the lowering of the sample probe 3 is stopped. The clearance between the distal end of the sample probe 3 and the bottom surface 201 of the reaction vessel can therefore be optimized. After the optimization, the automatic analyzer waits for the sample at the distal end of the sample probe 3 to fully spread in a wetting condition over the bottom surface 201 of the reaction vessel, as shown in Fig. 6 (c), or start wettingly spreading. Following the wetting spread of the sample, a second discharging operation is started and a previously set volume of the sample is discharged. Sample sticking to the lateral faces of the sample probe 3 can be prevented by conducting the second discharging operation while lifting up the sample probe 3 as in Fig. 6 (d).

Another method of detecting the contact between the ball-like liquid droplet 204 and the bottom surface 201 of the reaction vessel is by sensing the spread of the sample to the bottom surface 201 thereof, from a change in pressure value. Lowering the sample probe 3 with the ball-like liquid droplet 204 previously existing at the distal end of the sample probe 3 during the first discharging operation, as in Fig. 6 (a), brings the ball-like liquid droplet 204 into contact with the bottom surface 201 of the reaction vessel, as in Fig. 6 (b). When the liquid droplet changes from a shape in Fig. 6 (b) to that of Fig. 6 (c), that is, when the liquid droplet 204 wettingly spreads to the bottom surface 201 of the reaction vessel, since the pressure in the flow pathway of the sample probe 3 changes, a pressure sensor 152 or the like disposed on the flow pathway of the sample probe 3 senses and measures the pressure change and the lowering of the sample probe 3 is stopped. A fixed time is provided for the sample, discharged in the first discharging operation and held by the distal end of the sample probe 3, to fully spread in a wetting condition to the bottom surface 201 of the reaction vessel as in Fig. 6 (c), or to start wettingly spreading. Following the wetting spread of the sample, second discharging is started and a previously set volume of the sample is discharged. In this case, the sample can likewise be discharged without allowing it to stick to the lateral faces of the sample probe 3, by conducting the second discharge while lifting up the sample probe 3 as in Fig. 6 (d).

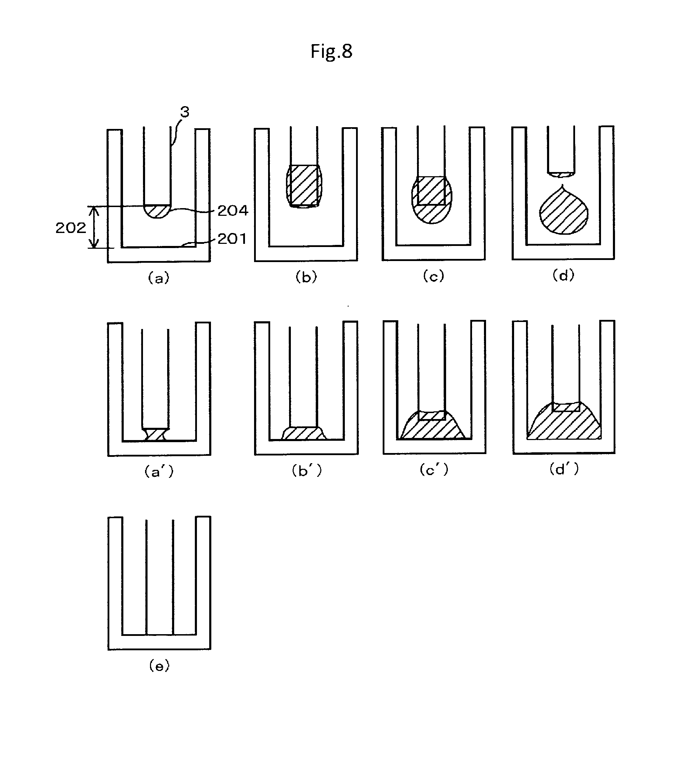

Yet another embodiment of the present invention will be described referring to Fig. 8.

In an apparatus configuration of the present embodiment, a pressure sensor 152 is disposed on the flow pathway of the sample probe 3, as in the above embodiment.

If the clearance 202 between the distal end of the sample probe 3 and the bottom surface 201 of the reaction vessel is not small, when discharging is started, the liquid droplet 204 first sticks to a lower surface of the sample probe 3, as shown in Fig. 8 (a). If discharging is continued and typically the amount of discharged sample exceeds a cubic volume shown in Table 1 or 2, the sample will rise to the lateral faces of the sample probe 3, as in Fig. 8 (b). If discharging is further continued and typically the amount of discharged sample exceeds 5 microliters, the sample will assume a liquid droplet shape encompassing the lateral faces and lower surface of the sample probe 3, as in Fig. 8 (c). If discharging is further continued and typically the amount of discharged sample exceeds 15 microliters, the liquid droplet will drop as shown in Fig. 8 (d). During discharging under the same quantitative conditions as those of (a) to (d), if the clearance 202 is small and the liquid droplet 204 is in contact with the bottom surface 201 of the reaction vessel, respective droplet shapes will be as shown in sections (a') to (d') of Fig. 8. If the clearance 202 is very small, a blockade is caused, as in Fig. 8 (e) will result, with the liquid remaining undischarged from the sample probe 3.

Surface tension of the liquid causes a pressure difference, called the Laplace pressure, between the outside and inside of the liquid droplet, and the pressure difference is determined by a magnitude of the surface tension of the liquid and a curvature of the shape of its surface. Since the surface of the liquid droplet has a different curvature in each of the states shown in (a) to (d), (a') to (d') of Fig. 8, to which state the curvature corresponds can be determined by measuring the pressure with the pressure sensor 152. In addition, under the state shown in (e), the liquid is blocked inside the sample probe 3 and thus the pressure increases, so the state of (e) can be easily identified by measuring the pressure with the pressure sensor 152.

After a fixed amount of liquid has been discharged from the sample probe 3, operation of the present embodiment is made to change according to a particular result of the pressure measurement with the pressure sensor 152.

Depending on how much of the liquid is to be discharged prior to the pressure measurement and what kind of operation is to be selected after the pressure measurement, any one of several schemes is useable to implement the below.

The first of the several schemes is the one conducted by stopping the discharge operation at the discharging volume corresponding to section (a) or (a') of Fig. 8, and then measuring the pressure. As a result of the pressure measurement, if the pressure is determinable to correspond to the state of (a), the sample probe 3 is lowered to obtain the state of (a'). If the pressure is determinable to correspond to the state of (e), the sample probe 3 is lifted to obtain the state of (a'). After the state of (a') has been obtained, second and subsequent discharging operations are started and the sample is discharged until the previously set discharging volume has been reached.

In the first scheme of the present embodiment, before the liquid droplet rises to the lateral faces of the probe, discharging is temporarily stopped for pressure detection, so that the pressure can be sensed in a stationary state and thus the state of the liquid droplet can be discriminated accurately.

Additionally, in the first scheme of the present embodiment, a comparison is conducted between the pressure in the state of (a) and that of the state of (a'). It can be seen, therefore, that the curvature of the shape of the liquid droplet significantly differs between the two states and thus that there is a significant difference in the Laplace pressure. Hence, the liquid droplet state can be discriminated with high reliability.

Furthermore, in the first scheme of the present embodiment, before the liquid rises to the lateral faces of the sample probe, the lowering of the probe is stopped to bring the liquid droplet into contact with the bottom surface of the reaction vessel. A change in dispensing volume due to the wetting of the probe lateral faces can therefore be avoided, which in turn enables highly accurate analysis by the automatic analyzer.

Moreover, in the first scheme of the present embodiment, since the probe is lowered or lifted depending on a result of state discrimination, the automatic analyzer can conduct highly accurate analyses based on highly reliable dispensing, without being affected in discharge results even when the clearance between the probe and the reaction vessel changes.

Besides, in the first scheme of the present embodiment, even if probe height control accuracy is low, this control accuracy is adjusted, such that a probe height control mechanism can be simplified and thus a low-cost automatic analyzer can be provided.

The second of the several schemes useable according to the present embodiment is conducted by stopping the discharge operation at the discharging volume corresponding to section (b) or (b') of Fig. 8, and then measuring the pressure. As a result of the pressure measurement, if the pressure is determinable to correspond to the state of (b), the sample probe 3 is lowered to obtain the state of (b'). If the pressure is determinable to correspond to the state of (e), the sample probe 3 is lifted to obtain the state of (b'). If the previously set discharging volume is larger than the first discharging volume, second and subsequent discharging operations are conducted.

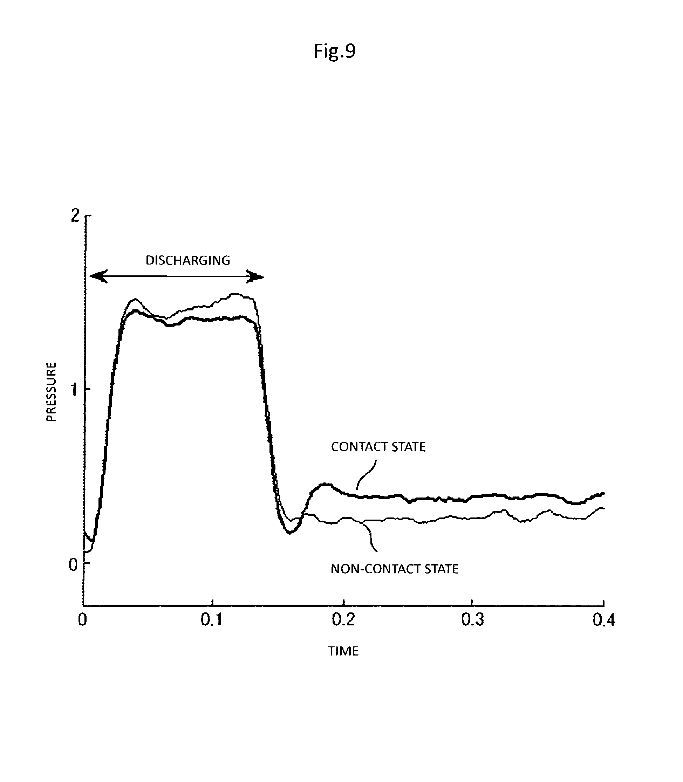

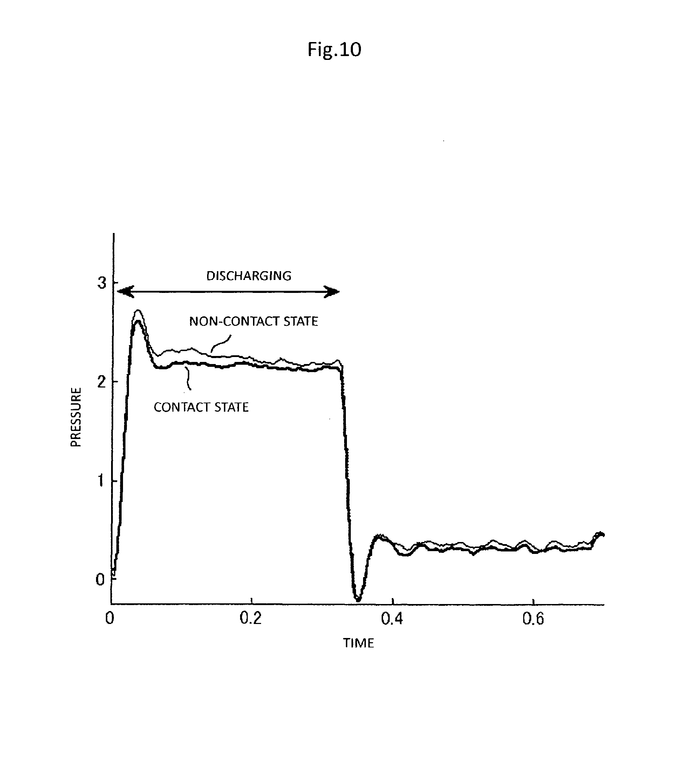

Fig. 9 shows an example of pressure measurement results obtained when the automatic analyzer is operated under the above mentioned dispensing conditions. Between the state of (b') indicating that the liquid droplet is in contact with the bottom surface of the reaction vessel, and the state of (b) indicating that the liquid droplet is not in contact, there is a clear pressure difference, which also enables state discrimination. Fig. 10 shows an example of pressure measurement results obtained when the sample is discharged in excess of the discharging volume shown as (b) or (b'), or until the discharging volume shown as (c) or (c') has been reached. In this example, discrimination is difficult because of an insignificant pressure difference between the contact state and the non-contact state.

In the second scheme of the present embodiment, since discharging is also brought to a temporary stop before pressure is detected, substantially the same effects as those of the first scheme can be obtained.

In the second scheme of the present embodiment, a comparison is also conducted between the pressure in the state of (b) and that of the state of (b'). It can be seen, therefore, that the curvature of the shape of the liquid droplet significantly differs between the two states and thus that there is a significant difference in the Laplace pressure. Hence, the liquid droplet state can be discriminated with high reliability.

In addition, since the second scheme of the present embodiment, unlike the first scheme, does not involve temporarily stopping of the discharging process under the state of (a), the dispensing time required can be shortened, which enables faster analysis by the automatic analyzer.

Furthermore, in the second scheme of the present embodiment, when the previously set discharging volume is 5 microliters or larger, discharging is temporarily stopped before pressure is detected. Therefore, whether the liquid droplet is in contact with the bottom surface of the reaction vessel can be determined under a condition of a significant Laplace pressure difference as in Fig. 9, as well as under a condition of an insignificant Laplace pressure difference as in Fig. 10. This enables the automatic analyzer to conduct highly accurate analyses based on highly reliable dispensing.

Moreover, in the second scheme of the present embodiment, when the previously set discharging volume is large, discharging is temporarily stopped before pressure is measured. Hence, after confirmation of the fact that the liquid droplet is in contact with the bottom surface of the reaction vessel, the probe can be lifted while discharging additional liquid, so the amount of liquid that sticks to the lateral faces of the probe can be minimized and thus, highly accurate dispensing can be achieved.

Besides, in the second scheme of the present embodiment, operation can be controlled so that as a result of pressure measurement, if the liquid droplet is determined not to be in contact with the bottom surface of the reaction vessel, this state is regarded as indicating some abnormality, with the following operation being stopped and a warning being issued.

The third of the several schemes useable according to the present embodiment is by first discharging a previously set sample volume without dividing it, then after the discharging operation, measuring pressure and discriminating the state of the liquid droplet, and controlling the analyzer to appropriately operate according to a particular result of the discrimination. If the clearance 202 is appropriate, the after-discharge state of the liquid droplet is either of states (a') to (d') of Fig. 8, depending on the magnitude of the previously set sample volume. Either of the states (a) to (d) of Fig. 8 applies if the clearance 202 is larger than the appropriate. The state of (e) of Fig. 8 applies if the clearance 202 is too small. The analyzer determines the liquid droplet state from pressure and then properly operates. More specifically, the proper operation of the analyzer includes controlling probe height and moving the probe to an appropriate position, issuing a warning about the abnormality and stopping the operation that follows, and the like.

In the third scheme of the present embodiment, since the analyzer can also determine the state of the liquid droplet from pressure detection results and then properly operate, there is the effect that even if probe height changes, the sample can be dispensed properly and highly accurate analyses conducted.

Additionally, in the third scheme of the present embodiment, since the sample is only discharged one time, not in split form, the dispensing time required is saved and the automatic analyzer achieves high throughput.

Third Embodiment

Next, a third embodiment of the present invention will be described. The present embodiment envisages a large discharging volume.

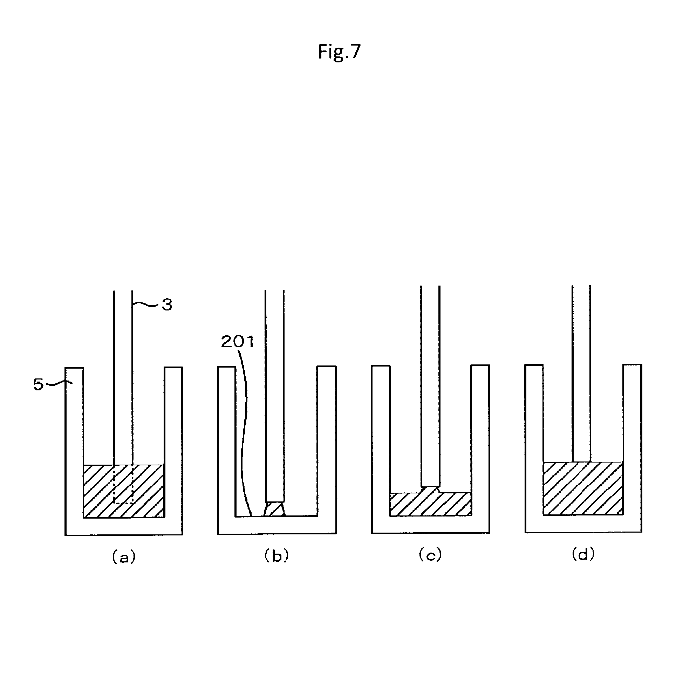

After first discharging operation using the above method has been conducted to make the sample wettingly spread over to the bottom surface 201 of the reaction vessel, if second discharging operation is conducted without the sample probe 3 being lifted, the contact area between the lateral faces of the sample probe 3 and the discharged sample is estimated to increase as in Fig. 7 (a), with the result that when the sample probe 3 is later lifted up, a greater deal of the sample may stick to the lateral faces of the sample probe 3. It has been described above that discharging the sample while lifting the sample probe 3 is effective for minimizing the amount of sample that may stick to the lateral faces of the sample probe 3. That is because, when the sample-discharging volume is large, since the discharging rate of the sample changes with the viscosity and other factors of the sample, a relationship between a lifting time of the sample probe and the time required for the probe to discharge all of the previously set discharging volume is likely to become unstable. In other words, even if the sample probe 3 is lifted during discharging, since a build-up rate of the discharged sample to its liquid level may be lower than a lifting speed of the sample probe, the sample is estimated to splash from the distal end of the sample probe 3. Conversely, since the build-up rate of the discharged sample to the liquid level may be higher than the lifting speed of the sample probe, the sample is estimated to stick to the lateral faces of the sample probe 3.

Means for solving these problems is described below referring to Fig. 7 that shows states (b) to (d). The amount of sample that sticks to the lateral faces of the sample probe can be reduced by, after waiting for the sample to wettingly spread over the bottom surface 201 of the reaction vessel following the completion of the first discharging operation, as in Fig. 7 (b), lifting the sample probe 3 while discharging the sample in the second operation, as in Fig. 7 (c). In such cases as the reaction vessel being large in cross-sectional area, even if the second discharge is conducted at the same position as the height of the first discharging operation" and after the discharge, the sample probe 3 is lifted, controlling the second discharging volume not to allow the sample to rise to the lateral faces of the sample probe will enable reduction in the amount of sample that sticks to the lateral faces of the sample probe.

After the second discharging operation, third discharging operation is conducted, during which, the sample probe 3 is further lifted as in Fig. 7 (d).

In this way, the automatic analyzer discharges the sample stepwise while lifting the sample probe, so even when the previously set discharging volume is large, the amount of sample that sticks to the lateral faces of the sample probe 3 can be reduced for improved dispensing accuracy.

In the present embodiment, sample sticking to the lateral faces of the sample probe 3 would likewise be preventable by dispensing the sample in the following manner. First during sample suction, the viscosity and other factors of the sample are measured using the pressure sensor 152 (or the like) that is disposed on a liquid line of the sample probe 3. Next during the first discharge, the sample is made to wettingly spread over the bottom surface 201 of the reaction vessel. Finally, when the automatic analyzer operates the sample probe 3 properly in lifting the probe, the analyzer changes the lifting speed of the probe to fit the kind of the sample.

While an example of an automatic analyzer designed to discharge a sample in three separate steps has been described in the present embodiment, the present invention does not strictly define the number of discharging operations to be conducted for a particular discharging volume. Instead, the particular discharging volume or the particular kind of sample may permit the previously set sample volume to be discharged in multiple split actions. In the fields that require accurate microvolume sample dispensing with a probe or a tip, the scope of application of the invention is not limited to automatic analyzers.

Description of Reference Numerals

1       Sampling mechanism

2       Sampling arm

3       Sample probe

4       Reaction disk

5       Reaction vessel

101     Sample container

| 102 | Sample disk |
| 103 | Computer |
| 104 | Interface |
| 107 | Sampling pump. |
| 110 | Reagent dispensing probe |
| 111 | Reagent pump |
| 112 | Reagent bottle |
| 113 | Stirring mechanism |
| 115 | Photometer |
| 116 | A/D converter |
| 117 | Printer |
| 118 | CRT unit |
| 119 | Reaction vessel cleaning mechanism |
| 120 | Cleaning pump |
| 121 | Keyboard |
| 122 | Memory |
| 125 | Reagent disk |
| 151 | Liquid level detection circuit |
| 152 | Pressure sensor |
| 153 | Pressure detection circuit |
| 201 | Bottom surface of reaction vessel |
| 202 | Clearance |
| 203 | Critical ball-like liquid droplet holding height |
| 204 | Ball-like liquid droplet |

**Claims**

1. An automatic analyzer comprising:

a probe for discharging a liquid;
a vessel for accommodating the liquid as discharged from the probe;
a syringe mechanism for controlling the discharging of the liquid so that the probe discharges the liquid in a plurality of split actions; and
a probe driving mechanism for controlling a clearance between a distal end of the probe and a bottom surface of the vessel so that the liquid discharged from the probe by the first of the plurality of split actions thereof will come into contact with the bottom surface of the vessel.

2. The automatic analyzer according to claim 1, wherein
the probe driving mechanism controls the probe so that the clearance between the distal end of the probe and the bottom surface of the vessel is kept constant during a time from completion of the first discharging operation to a start of next discharging operation.

3. The automatic analyzer according to claim 1, wherein
the probe driving mechanism controls the probe to move upward at least while the syringe mechanism is conducting the last of the plurality of discharging operations.

4. The automatic analyzer according to claim 1, wherein
the syringe mechanism has a plurality of control methods including:

a first dispensing-control method for dispensing the liquid into the vessel while the probe driving mechanism is keeping a constant clearance between the distal end of the probe and the bottom surface of the vessel; and
a second dispensing-control method for dispensing the liquid into the vessel while the probe driving mechanism is driving the probe.

5. The automatic analyzer according to claim 4, wherein
when dispensing with the first dispensing-control method is to be followed by dispensing with the second dispensing-control method, the probe driving mechanism provides a waiting time between dispensing with the first dispensing-control method, and dispensing with the second dispensing-control method.

6. The automatic analyzer according to claim 4, wherein the syringe mechanism is configured to:

have a third dispensing-control method for creating a ball-like liquid droplet at the distal end of the probe by discharging a previously set volume of the liquid before the probe driving mechanism comes to temporary rest with the constant clearance between the distal end of the probe and the bottom surface of the vessel; and
include a circuit for detecting a change in capacitance between the distal end of the probe and the bottom surface of the vessel, caused by contact of the ball-like liquid droplet with the bottom surface of the vessel.

7. An automatic analyzer comprising:

a probe for discharging a liquid;
a vessel for accommodating the liquid as discharged from the probe;
a syringe mechanism for controlling the discharging of the liquid so that the probe discharges the liquid in a plurality of split actions; and
a pressure sensor for detecting an internal pressure of a liquid flow line intercommunicating between the probe and the syringe mechanism;
wherein a detection value from the pressure sensor, obtained after the first discharge action of the plurality of split discharge actions, is used to control operation of the probe.

8. The automatic analyzer according to claim 4, further comprising:

a pressure sensor for detecting an internal pressure of a liquid flow line intercommunicating between the probe and the syringe mechanism;
wherein the probe driving mechanism conducts operational control of the probe, based on a detection value obtained by the pressure sensor when the probe suctions the liquid.

9. The automatic analyzer according to claim 8, wherein
using the detection value received from the pressure sensor, the probe driving mechanism controls at least one of the constant clearance maintained or an amount of the liquid dispensed therein in the first dispensing-control method, a lifting speed of the probe or an amount of the liquid dispensed therein in the second dispensing-control method, and a size of a ball-like liquid droplet created at a distal end of the probe in the third dispensing-control method.

10. A method for controlling an automatic analyzer which includes

a probe for discharging a liquid, and
a vessel for accommodating the liquid discharged from the probe,
the control method comprising:

a first dispensing-control method for dispensing the liquid while a constant clearance is maintained between a distal end of the probe and a bottom surface of the vessel; and
a second dispensing-control method for dispensing the liquid while the probe is being driven;
wherein, when the liquid is dispensed from the probe into the vessel, the first dispensing-control method and the second dispensing-control method are used to dispense the liquid stepwise in a plurality of split actions.

11. The automatic analyzer control method according to claim 10, wherein
when dispensing with the first dispensing-control method is to be followed by dispensing with the second dispensing-control method, a waiting time is provided between dispensing with the first dispensing-control method, and dispensing with the second dispensing-control method.

Fig.1

Fig.2

(a)          (b)          (c)

Fig.3

$\gamma_C$ : SURFACE TENSION OF REACTION VESSEL  $\gamma_{CS}$ : INTERFACIAL TENSION

$\gamma_S$ : SURFACE TENSION OF SAMPLE  $\theta$ : ANGLE OF CONTACT

Fig.4

(a)          (b)          (c)

(d)          (e)

Fig.5

Fig.6

(a)      (b)      (c)      (d)

Fig.7

(a)    (b)    (c)    (d)

Fig.8

Fig.9

Fig.10

<div align="center">

**INTERNATIONAL SEARCH REPORT**

</div>

| International application No. |
|---|
| PCT/JP2010/007179 |

| A. CLASSIFICATION OF SUBJECT MATTER |
|---|
| *G01N35/10*(2006.01)i, *B01J4/00*(2006.01)i, *G01N1/00*(2006.01)i |

According to International Patent Classification (IPC) or to both national classification and IPC

| B. FIELDS SEARCHED |
|---|
| Minimum documentation searched (classification system followed by classification symbols) |
| G01N35/00-37/00, B01J4/00-7/02, G01N1/00-1/44 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2001-91524 A  (Aloka Co., Ltd.),<br>06 April 2001 (06.04.2001),<br>paragraph [0031]<br>(Family: none) | 1-6,8,9 |
| Y | JP 11-344498 A  (Aloka Co., Ltd.),<br>14 December 1999 (14.12.1999),<br>paragraphs [0018], [0019]; fig. 2, 3<br>(Family: none) | 1-6,8,9 |
| Y | JP 6-324058 A  (Olympus Optical Co., Ltd.),<br>25 November 1994 (25.11.1994),<br>paragraphs [0035] to [0038]; fig. 2<br>(Family: none) | 1-6,8,9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March, 2011 (02.03.11) | 15 March, 2011 (15.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/007179

C (Continuation). DOCUMENTS CONSIDERED TO BE RELEVANT

| Category* | Citation of document, with indication, where appropriate, of the relevant passages | Relevant to claim No. |
|---|---|---|
| Y | JP 3-37569 A (Fuji Photo Film Co., Ltd.), 18 February 1991 (18.02.1991), column 15, line 8 to column 16, line 18; fig. 4 (Family: none) | 1-6,8,9 |
| Y | JP 7-239334 A (Fuji Photo Film Co., Ltd.), 12 September 1995 (12.09.1995), paragraphs [0022] to [0034]; fig. 1, 2 & US 5555767 A & EP 670483 A3 & EP 670483 A2 | 1-6,8,9 |
| A | JP 2003-172744 A (Mitsubishi Heavy Industries, Ltd.), 20 June 2003 (20.06.2003), entire text; all drawings (Family: none) | 1-6,8,9 |

Form PCT/ISA/210 (continuation of second sheet) (July 2009)

| **INTERNATIONAL SEARCH REPORT** | International application No. |
| --- | --- |
| | PCT/JP2010/007179 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   Claims 1 - 6, 8 and 9.

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/007179 |

<u>Continuation of Box No.III of continuation of first sheet(2)</u>

The invention of claim 1, the invention of claim 7 and the invention of claim 10 have a common matter of "an automatic analyzer comprising: a probe for ejecting a liquid; a container for containing the liquid to be ejected from said probe; a syringe mechanism for controlling said probe by dividing said liquid, thereby to eject said liquid (one or) more times - - -".
However, the aforementioned common matter is not the special technical feature within the meaning of PCT Rule 13.2, second sentence, as based on the Patent Cooperation Treaty, since it makes no contribution over the prior art, as disclosed in JP 6-249861, for example.

With the discussion being in mind, there are investigated the special technical features of the invention of claim 1, the invention of claim 7 and the invention of claim 10. It is admitted that the special technical feature of the invention of claim 1 is "that the distance between the tip of said probe and the bottom of said container is controlled so that the specimen discharged from said probe at the first of a plurality of discharges may contact the bottom face of said container".
Meanwhile, the special technical feature of the invention of claim 7 is that the action of said probe is controlled on the basis of the detected value of said pressure sensor after the first of the discharges divided into a plurality", and the special technical feature of the invention of claim 10 is that, when the liquid is dispensed from said probe into said container, the liquids divided into plurality are stepwise dispensed by using said first and second dispense control methods".
Hence, the aforementioned individual inventions do not comply with the requirement of unity of invention, since they have different special technical features.

From the reasoning thus far made, it cannot be said that the invention of claim 1 and claims 2-6, 8 and 9 dependent on claim 1, the invention of claim 7, and the invention of claim 10 and claim 11 dependent on claim 10 do not have the same or corresponding special technical features any more so that the aforementioned individual inventions do not comply with the requirement of unity of inventions, as specified by PCT Rule 13.1 on the basis of the Patent Cooperation Treaty.

Form PCT/ISA/210 (extra sheet) (July 2009)

**EP 2 525 230 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003344426 A